# EUROPEAN PATENT SPECIFICATION

(11) **EP 0 060 631 B1**
(45) Date of publication and mention of the grant of the patent: **27.12.1985**
(21) Application number: 82300948.5
(22) Date of filing: 24.02.1982
(51) Int. Cl.: H01S 3/045, H01S 3/02

(54) **Cooling of laser parts**
Kühlung für Teile eines Lasers
Réfrigération des parties d'un laser

(30) Priority: 25.02.1981 US 237926; 25.02.1981 US 237927; 25.02.1981 US 237928
(43) Date of publication of application: 22.09.1982
(73) Proprietor: LEXEL CORPORATION, Palo Alto California 94303 (US)
(72) Inventor: Mohler, Galen E., Palo Alto California 94303 (US)
(74) Representative: Ford, Michael Frederick

## Description

This invention relates to laser apparatus, and is concerned with the cooling of the laser, and in its particular embodiments with the support and mounting of apparatus parts.

Lasers generate a directed beam of coherent radiation by selectively exciting the atoms of a lasable medium and reflecting the resulting radiation back and forth many times through the lasable medium. During the generation of such beams, lasers produce heat that can cause undesirable consequences, if not removed. In gas lasers, for example, excessive amounts of heat often damage the plasma tube. Even the presence of only moderate amounts of heat can result in undesirable consequences of laser resonator detuning and laser beam misalignment. Such detuning and/or misalignment occurs whenever elements of the resonator structure are slightly displaced as a result of heating.

Both liquid and air cooling devices are employed to remove harmful heat from lasers. Air cooled lasers have the advantage of being more suitable for applications where coolant leakage could cause serious damage to equipment and, if it was not that other more significant disadvantages are present, would be used in preference to liquid cooled lasers in such applications. One significant disadvantage limiting the use of air cooled lasers has been the heat removing inefficiency of the structures of prior art air cooled lasers. This inefficiency is caused by one or more of the following deficiencies in air cooled laser structures: poor distribution of air flow, restricted air flow, formation of a laminar air flow past the laser structure from which heat is to be removed, and/or direction of the air flow along the length of the laser structure.

For example, United States Patent 3,763,442 describes an air cooled gas ion laser structure having cooling fin and air duct arrangements that direct cooling air along the length of a long plasma tube. In one described arrangement, air is introduced at one end of the plasma tube, passes along its entire length and is discharged at the other end. While the air may be cool at the introduction end of the plasma tube, it is increasingly heated by the fins as it passes along the length of the plasma tube. The hotter the air becomes, the less efficient it becomes as a cooling medium. Therefore, the parts of the plasma tube farthest from the end at which the air is introduced tend to be cooled less effectively. In the second arrangement described in the aforementioned 3,763.442 patent, air is introduced at both ends of the long plasma tube and is discharged through several small exhaust ports in the air duct midlength of the plasma tube. This arrangement does not completely solve the above described inefficient cooling problem because the air is heated by the end portions of the plasma tube before arriving at the central portion of the tube. In gas ion lasers, considerable power is dissipated by the plasma tube, with most being dissipated over a short, centrally located length of the tube. Therefore, the cooling efficiency of the air is poorest in the second arrangement in the region where most heat is generated. Moreover, the construction of the second arrangement has other disadvantages adversely affecting the cooling efficiency. Directing the two air flows in opposite directions at each other causes a substantial reduction in the air flow in the region where the two air flows meet and may create pockets of dead air spaced and very little cooling at the confluence of oppositely directed air flows. In the second arrangement, these effects occur over the centrally located length of the plasma tube at the air duct exhaust ports, which is the location where most heat is generated. In addition, the small size of the exhaust ports and their right angle orientation to the air flow paths defined by the fins form a restriction in the air flow path that limits the air flow and tends to produce a laminar flow over the cooling fins. Both of these effects reduce the cooling efficiency.

Other air cooled lasers have employed a plurality of radially extending cooling fins encircling the plasma tube and means forcing air to flow across the plasma tube instead of along its length. An example of this comprising the features defined in the pre-characterising part of claim 1 appears in "Optics Communications" at Volume 20 pages 220-222 [1977]. One or more fans cooperating with an air duct may be employed to establish air flow across the plasma tube. Radial fin arrangements avoid the limitations imposed on air flow path selection by air fin arrangements disclosed in the aforementioned 3,763,442 patent. However, the air cooled lasers using radially extending fins show also the various disadvantages discussed hereinbefore with reference to the 3,763,442 patent because of the fan and air duct arrangements employed. Some radial fin arrangements include two spaced apart fans, usually, at or close to opposite ends of the plasma tube, and a single air duct exhaust port located between the fans, usually, midway along the plasma tube. Other arrangements employ a single fan located midway along the plasma tube and exhaust ports at opposite ends of the plasma tube. In such arrangements, air either flows into a single exhaust port from opposite directions or flows in opposite directions away from a single fan. In either case, there tends to be established unwanted regions of reduced air flow and dead air space where little or no cooling occurs. Still other radial fin arrangements are constructed with relatively small exhaust ports and/or air ducts that establish air flow paths with abrupt changes in direction. Such constructions form restrictions in the air flow path that limit the air flow and tend to produce a laminar air flow over the cooling fins. Either result is undesirable since both reduce the cooling efficiency.

in summary, air cooled laser structures heretofore employed do not produce a distribution or flow of air that efficiently removes heat from the lasers. The air distribution and flow deficiencies and concomitant cooling inefficiency have limited the use of air cooled lasers to those applications where detuning of the laser resonator and misalignment of the generated laser beam can be tolerated.

Another significant disadvantage limiting the use of air cooled lasers is the poor signal-to-noise ratio characterising such lasers. It has been found that a significant amount of noise is generated in prior art air cooled lasers because the cooling air is allowed to flow over and disturb the optical element housings and resonator support structure. Such disturbance and concomitant noise occurs to some extent even when the optical elements and resonator are held firmly in position by a substantial structure.

A laser's mirrors and lasable medium container form a resonant cavity, commonly referred to as a resonator, that requires the mirror and container assemblies forming the resonator to be highly stable in order to avoid detuning and/or beam misalignment. Furthermore, the resonator usually is accurately positioned relative to a reference plane so that the path of the generated laser beam can be accurately located.

Typically, the lasers employ support structures that include a platform or chassis upon which the various components of the laser are securely supported. The principal components of a typical laser apparatus include the resonator and its supporting assembly, cooling apparatus and its supporting assembly, electronics and a housing enclosing the various components forming the laser apparatus. In addition to supporting the various components of the laser apparatus, the platform often also serves as the reference plane or optical bench with respect to which the components of the resonator are carefully aligned to obtain a highly directed narrow laser beam of one or more exact frequencies. The ability of lasers to produce such beams while avoiding detuning and/or beam misalignment depends to a large extent upon the stability of the laser support structures against temperature variations and physical disturbances occurring in the surrounding environment and within the laser apparatus itself. Even small disturbances of the relative position of the resonator components cause detuning and/or beam misalignment.

To protect against the harmful effects of temperature variations and physical disturbances, it is the practice to construct massive layer support structures, using materials of similar, low coefficients of thermal expansion and high thermal conductivity. The massiveness of the support structure provides a slow response to environmental temperature variations, while the high thermal conductivity allows the resonator to adjust uniformly to changes in the equilibrium temperature of the environment. On the other hand, a low coefficient of thermal expansion minimizes the amount of disturbances suffered by the resonator components as a result of environmental temperature variations. In addition, the massive support structure cooperates with rugged resonator mounts to minimize sensitivity of the resonator to shock, vibration and other physical disturbances commonly encountered by lasers.

Even with such laser support structure constructions, lasers remain sensitive to temperature variations and physical disturbances and often require repeated compensating adjustments of their resonator components to correct detuning and beam misalignment. A principal reason for such sensitivity resides in the construction approach followed in such prior art lasers. As mentioned above, the chassis of prior art lasers serves as the main supporting element for all other components of the laser. Consequently, any disturbance transmitted to the chassis is, in turn, transmitted to all other parts of the laser apparatus, which includes the resonator. For example, vibrations characteristic of cooling mechanisms supported by the chassis of a laser cause a corresponding modulation of the laser beam. So do external disturbances transmitted to the chassis by the laser housing. Furthermore, thermal expansion and contraction of the chassis produce corresponding movement of the supported resonator components, often causing detuning and/or beam misalignment. Various mechanisms have been used to join the laser resonator structure to the chassis in a manner that isolates the resonator from dimensional changes in the chassis. For example, our United States Patent 4,201,951 describes two mechanisms used for that purpose. One is a flexible strip of metal that isolates the resonator from limited dimensional disturbances occurring in the chassis in the direction of the length of the resonator. Another is a spherical bearing having its race fastened securely to the chassis and cooperating with a shaft slidably received within the ball to support the resonator. The mechanism permits differential axis dimensional changes between the chassis and the resonator. Sliding of the shaft within the ball serves to accommodate movement of the chassis in the direction of the length of the resonator. Rotation of the ball in the race isolates the resonator from torsional disturbances in the chassis. However, such devices will not fully isolate the resonator from disturbances or dimensional variations that occur in a user supplied support structure, such as an exterior optical bench or the like, upon which the laser apparatus rests.

Gas lasers include an elongated envelope containing a lasable gas medium, which is supported between opposing mirrors to define therewith a laser resonator. Ordinarily, the mirrors are located exteriorly of the envelope and the coherent radiation generated by the lasing action within the envelope is allowed to pass to and from the mirrors through Brewster windows closing opposite ends of the envelope. A sealed enclosure surrounds the Brewster window and mirror at each end of the envelope to maintain the window, mirror and the region between them free of contaminants from the exterior. Precise and stable angular alignment of the mirrors is required to assure that the generated laser radiation is reflected by the mirrors to make the necessary passes through the lasing medium for laser oscillation. This is achieved by mounting mechanisms that permit precise adjustment of the angular orientation of the mirrors while providing stable positioning.

Our U.S. Patent 3,864,029 describes a compact and simple assembly for adjustably supporting laser mirrors while shielding the mirrors and associated Brewster windows from contaminants in the surrounding environment. In that assembly, a tubular cover is supported at one of its ends by the Brewster window assembly and extends to be supported at its other end by a mirror mounting structure. The mirror mounting structure includes a mirror support means that permits precise adjustment of the angular orientation of the mirrors to the laser beam path. To facilitate the adjustment of the angular orientation and avoid undue strain on the associated fragile Brewster window assembly, the tubular cover includes a tubular ball joint along its length that permits the mirror end of the tubular cover to be moved transverse to the laser beam axis without unduly disturbing the Brewster window end of the tubular cover. This tubular cover construction minimizes the strain placed on the fragile Brewster window assembly when adjustments are made in the angular orientation of the associated mirror. However, for lasers that are to be used in applications where shock, vibrations and other substantial disturbances are likely to be encountered, it is desirable to have a more substantial assembly for adjustably supporting the mirrors while shielding them and their associated Brewster windows from contamination. Such disturbances will produce corresponding disturbances in the positions of weakly or less than rigidly held laser optical elements. Disturbing the positions of the laser optical elements usually produces one or more of the following deleterious effects: detuning of the laser, misalignment of the laser beam and generation of noise in the laser beam. Of course, such effects are undesirable and great effort is taken in the construction of precision lasers to avoid them.

By means of the present invention, an air cooled laser apparatus is provided with an air supply and air duct arrangement that is productive of efficient cooling of the laser apparatus elements. Broadly, efficient cooling is achieved in accordance with the present invention by forming an air flow being differently distributed along the direction of the laser beam path so that a greater volume of air is directed over parts of the laser apparatus where most heat is generated.

For example, in a gas ion laser, the coherent radiation forming the laser beam is produced by subjecting a lasable gas medium confined by a plasma tube to a discharge established in a region extending between an anode and cathode. The discharge excites and ionizes the confined gas medium to produce the desired lasing action. Substantial power is dissipated by the plasma tube as a result of contact with the excited and ionized gas, with the dissipation concentrated at localized regions along the length of the plasma tube located about the midpoint and opposite ends of the lasing region extending between the anode and cathode.

To remove efficiently the heat generated in laser structures by such concentrated power dissipation, the laser apparatus of the present invention comprises a laser resonator including a structure for confining a lasable medium and defining a lasing region between laser mirrors positioned in opposition to one another at spaced locations along a laser beam path; a plurality of thermally conductive cooling fins supported in a thermal conducting relationship with the structure of the laser resonator that confines the lasing medium to define air flow paths between adjacent ones of said fins, each of said cooling fins encircling said laser resonator structure and extending transverse to the laser beam path and air supply means establishing an air flow along air flow paths transverse to the laser beam path that pass between said cooling fins; and is characterised in that an air duct is provided extending from an intake port to an exhaust port to enclose the cooling fins and define said air flow paths; and that said air supply means are coupled to at least one of the ports of the air duct for establishing an air flow from the intake port, between the cooling fins and to the exhaust port, said air flow being non-uniformly distributed along the direction of the laser beam path so that a greater volume of air flows through regions located about ends of the lasing region and a midpoint therebetween then elsewhere.

Far more efficient cooling can be obtained with such air flow arrangements than with those characterizing the above discussed prior art air cooled lasers that introduce cool air at only localised regions along the length of the lasing medium confining structure. More efficient cooling is obtainable because the structure of the present invention does not rely on cooling some parts of the structure with air that has been heated by other parts of the structure. However, the air cooled later apparatus of the present invention achieves still greater efficiency of cooling by combining the above-described cooling fin and air duct arrangement with an air supply means that is coupled to the air duct to establish an air flow having air differently distributed along the direction of the laser beam path so that a greater volume of air flows through regions along the length of the structure surrounding the lasing medium located about the midpoint and opposite ends of the lasing region than elsewhere.

In gas ion lasers of the kind briefly described above, air flows of greater volume are directed over the cooling fins encircling the anode and cathode regions of the plasma tube and over the cooling fins encircling a centrally located length of the plasma tube. A most efficient removal of heat occurs in the air cooled laser of the present invention because the air flow is concentrated in regions where the most heat is generated by the laser and the entire length of the structure surrounding the laser region is exposed to unheated, cool air.

A central set of cooling fins may be electrically isolated from sets surrounding the electrodes, and the air flow may be distributed so that a greater volume of air flows over the central portion of the central set than over the outer sets, which themselves have greater flow than between the sets.

The efficient heat removal advantages are conveniently achieved in a preferred embodiment of the air cooled laser of the present invention by arranging the air duct to form a straight line air flow path extending transverse to the laser beam path from the intake port to the exhaust port and by the air supply means including two motor driven axial flow fans coupled in air flow communication with one of said ports side-by-side in the direction of the laser beam path with their air flow axes facing in the direction of extent of the cooling fins and each of the fans having a plurality of blades having tips that scribe a path aligned with the regions located about the midpoint and end of the lasing region. Said fans produce a maximum air flow close to the tips of their blades. By mounting the two fans side-by-side, the two air flows established by the fans in the region between them combine to form a net air flow greater than either fan produces alone. Thus, the side-by-side fans establish a combined air flow over the cooling fins whose volume is greatest in the region located about the midpoint of the lasing region that coincides with the part of the laser apparatus that generates the most heat. Furthermore, the fans separately establish lesser, but still high volume air flows over the cooling fins in the regions located about the opposite ends of the lasing region, which coincide with the parts of the laser apparatus that generate the next most quantity of heat. Employing an air duct that forms a straight line air flow path from the intake to the exhaust port in combination with the two fans assures that the air flow generated by the fans will retain the advantageous air volume distribution because restrictibns in the air flow path that would disrupt the air volume distribution are avoided.

The heat removing ability of the air cooled laser apparatus of the present invention is further enhanced by establishing a turbulent airflow over the cooling fins rather than a laminar air flow. A laminar air flow tends to form a thin layer of stagnant air along surfaces over which it passes. A stagnant layer of air along the cooling fin surfaces would impede the transfer of heat from the fins to the cooling air. On the other hand, a turbulent air flow disrupts the formation of stagnant air layers along the fin surfaces and brings more cooling air into contact with the fins, thereby, increasing heat removal. In the preferred two-fan embodiment of the present invention described above, a turbulent air flow is generated by positioning each of the fans so that the blades are spaced from the cooling fins a distance less than the diameter of the path scribed by the tips of the blades.

To minimize the introduction of noise to the generated laser beam, the air duct is preferably arranged so that the resonator support structure and all laser mirrors and transmission windows are located outside the duct and air flow. With this arrangement, the cooling air flow does not strike elements of the laser apparatus which, when disturbed, can introduce objectionable noise to the generated laser beam.

Another preferred embodiment of the present invention provides a laser apparatus with a support member providing a high degree of resonator tuning and laser beam direction stability. Resonator tuning and laser beam direction stability is achieved in accordance with said preferred embodiment of the present invention by the use of a laser support member for supporting the laser apparatus, a chassis and flexible coupling means supporting the chassis at the support member.

More specifically, the laser apparatus according to this preferred embodiment of the present invention includes a laser resonator having a structure for confining a lasable medium between laser mirrors positioned in opposition to one another at spaced locations along a selected laser beam path. The laser resonator is supported by a resonator support assembly with the lasable medium confining structure and laser mirrors relatively positioned so that radiation generated by lasing action in the lasable medium is directed along the selected laser beam path. Support members are secured to the resonator support assembly and extend therefrom to support the entire laser apparatus at an exterior reference member. A chassis for supporting other components of the laser apparatus is supported at the support members by a flexible coupling means that permit limited movement of the chassis relative to the support members of laser apparatus to thereby isolate the support members and resonator support assembly from disturbances that occur in the chassis. By supporting the laser resonator with a resonator support assembly that is directly supported at the user supplied reference member and suspending all other components of the laser apparatus from the resonator support assembly, a more accurate alignment of the laser resonator components and, hence, generated laser beam relative to an exterior reference, can be achieved. A more accurate alignment can be achieved because the resonator support assembly is not joined to the user supplied exterior reference member through a chassis or other laser apparatus components as is common in prior art laser apparatus and, therefore, is less susceptible to being detuned and/or misaligned by the occurrence of disturbances or dimensional variations in such laser apparatus components. The use of flexible coupling means to support such laser apparatus components relative to the resonator support assembly will isolate the assembly and, hence, laser resonator from such occurrences that could still cause detuning or misalignment.

In some laser applications, it is desirable to fasten the laser apparatus securely to an exterior reference member. For such applications, the laser apparatus according to an embodiment of the present invention employ support members that include means for fastening them securely to the exterior reference member. Furthermore, the support members include flexible parts permitting limited movement between the exterior reference member and the resonator support assembly secured to the support members in orthogonal directions, one of which is along the laser beam path and the other of which is transverse to a line extending between the laser beam path and the exterior reference member. The flexible parts serve to absorb small movements in the exterior reference member and prevent the transmission of forces along the support members that would tend to cause movement of the resonator components, such as might otherwise occur as a result of, for example, changes in the temperature of the reference member.

Lasers of moderate and higher power produce substantial heat that is removed by cooling mechanisms, typically of the air and liquid variety. A particularly salient feature of a preferred embodiment of the laser apparatus of the present invention is the mounting structure employed to suspend the cooling mechanism from the resonator suppport assembly whereby the resonator components are isolated from disturbing vibrations produced in the operation of the cooling mechanism. More specifically, the cooling mechanism is coupled for support by the chassis of the laser apparatus by a first shock absorbing means that permits limited movement of the cooling mechanism relative to the chassis to thereby isolate the chassis from the vibrations produced by the cooling mechanism. The chassis is in turn coupled for support by the support members by a second shock absorbing means that permits limited movement of the chassis relative to the support members, thereby isolating the support members and resonator support assembly from disturbances that occur in the chassis, including any dampened vibrations emanating from the cooling mechanism that are not fully absorbed by the first shock absorbing means. The two shock absorbing means between the cooling mechanism and support members doubly isolate the resonator from the cooling mechanism and prevent any harmful vibration disturbances from reaching the resonator.

In accordance with still another preferred embodiment of the present invention, a compact, simple rigid laser mirror mount and protection assembly provides the desired substantial construction that renders the laser's optical elements less sensitive to potentially harmful disturbances. Furthermore, the construction permits the angular orientation of the laser mirrors to be adjusted relative to associated Brewster windows without producing damaging or destructive strain in the fragile Brewster window assemblies and provides an effective shield for the mirrors, windows and regions therebetween against contamination form the surrounding environment.

More specifically, the laser mirror amount and protection assembly of this preferred embodiment of the present invention is for use in gas laser apparatus, which typically includes an elongated envelope containing a lasable gas medium located between laser radiation transmission windows and mirrors to define a laser beam path. The assembly of this preferred embodiment of the present invention includes an enclosure adapted to be joined to the laser envelope by a hermetically sealed joint so that the enclosure opens into and extends from the envelope to encircle the laser beam path with the interiors defined by the enclosure and envelope isolated hermetically from the surrounding environment. The enclosure includes a laser radiation transmissive window positioned to intercept the laser beam path whereby the laser radiation is permitted to pass from the interior to the exterior of the enclosure along the laser beam path. A rigid housing defining a passage is coupled by a flexible sealed joint to the enclosure, with the window of the enclosure in the passage and the passage extending along the laser beam path. The flexible sealed joint permits limited relative movement between the rigid housing and the enclosure in the direction of the laser beam path while inhibiting flow into the passage of contaminants from the surroundings. A seat is defined by the rigid housing for supporting a mirror and a seal is positioned between the mirror and housing to inhibit the flow into the passage of contaminants from the surroundings. A mounting structure is adapted to secure the rigid housing to the envelope whereby substantially all of the support for the rigid housing is provided by the structure supporting the laser envelope.

With the housing supported in this manner, it bears on the enclosure containing the radiation transmissive window with minimal force. This feature serves to protect fragile window assemblies from damage. In addition, the flexible sealed joint permits the rigid housing to be moved a limited amount transversely of the laser beam path for mirror alignment purposes without harmfully straining the enclosure. As the housing is so moved by a mechanism provided to adjust the angular orientation of the retained mirror relative to the laser beam path, the flexible sealed joint moves in a compensating fashion generally along the laser beam path so that no harmful force is transmitted to the enclosure. As long as movement of the rigid housing relative to the enclosure is limited to the small amounts typifying mirror alignments, the flexible sealed joint will protect the enclosure from damage. This is of particular advantage because enclosures provided with laser radiation transmissive windows are often quite expensive.

Preferably the mounting structure for securing the rigid housing to the envelope includes means for displacing the said rigid housing relative to said envelope to adjust the angular orientation of the surface of the mirror facing the window relative to the laser beam path.

As can be appreciated from the foregoing description of the rigid laser mirror mount and protection assembly the assambly has a sturdy, compact construction that protects the fragile elements against harmful forces without sacrificing the contamination protection and mirror adjustment features characterising prior art structures.

In a preferred constructional arrangement the enclosure is an elongated tubular member extending between two ends, one of said ends defining the opening of said enclosure located to intercept the laser beam path, the other of said ends having the window of said enclosure. This elongated tubular member is preferably an integral body having a metal segment along a length thereof at the end of said tubular member defining the opening and having a glass segment along a length thereof at the end of said tubular member having the window.

The hermetic seal means may include a flange member joined to the tubular member proximate said end defining said opening for supporting said tubular member from the envelope in a cantilevered manner. Such a flange member can be metal and have a central portion that encircles and is welded to an aforesaid metal segment of said tubular member to form a hermetic seal about said tubular member, the flange member extending outwardly from said central portion to a peripheral portion for joining by welding to the envelope of said laser apparatus.

The flexible sealed joint preferably couples the rigid housing to said enclosure proximate said end having the window. This joint can have a first O-ring of sealing material, a rigid collar encircling said elongated tubular member and defining a first seat thereabout supporting said first O-ring, a first seal face member encircling said elongated tubular member and engaging said first O-ring to force same against said first seat and against the glass segment of said tubular member to form the sealed joint, said rigid collar and first seal face member dimensioned to permit relative movement between them and said tubular member in the direction of the length of said tubular member.

The foregoing and other features and advantages of the air cooled laser apparatus according to an embodiment of the present invention will become more apparent upon consideration of the following more detailed description of the preferred embodiments of the invention taken together with the accompanying drawings in which:
Fig. 1 is a top, partially sectional view, broken in length, of a gas ion laser plasma tube and end mounting assemblies employed in a preferred embodiment of the present invention;
Fig. 2 is a side, partially sectional elevation view of a preferred embodiment of the laser apparatus of the present invention;
Fig. 3 is a bottom view taken on the plane indicated by the lines 3-3 in Fig. 2;
Fig. 4 is a cross sectional side elevation view taken on the plane indicated by the lines 4-4 in Fig. 2, with the plasma tube omitted to facilitate the illustration;
Fig. 5 is graph representing the air volume distribution of the air flow generated in the laser apparatus illustrated in Fig. 2 along the length of the plasma tube;
Fig. 6 is an elevation view taken on the plane indicated by the lines 6-6 in Fig. 2 showing only one of the two end support members employed in the laser apparatus illustrated in Fig. 2;
Fig. 7 is an elevation view taken on the plane indicated by the lines 7-7 in Fig. 2 showing only the other of the two end support members employed in the laser apparatus illustrated in Fig. 2;
Fig. 8 is an elevation view taken on the plane indicated by the lines 8-8 in Fig. 2 showing only one of the two mirror tuning assemblies employed in the laser apparatus illustrated in Fig. 2;
Fig. 9 is an elevation view taken on the plane indicated by the lines 9-9 in Fig. 2 showing only the other of the two mirror tuning assemblies employed in the laser apparatus illustrated in Fig. 2;
Fig. 10 is a partial cross section view, broken in length, taken across the width of the laser apparatus on the plane indicated by lines 10-10 in Fig. 2, and illustrating the laser chassis and housing mounting structure; and
Fig. 11 is a partial cross section view, broken in length, taken across the width of the laser apparatus on the plane indicated by lines 11-11 in Fig. 2, and illustrating the laser air cooling assembly mounting structure.

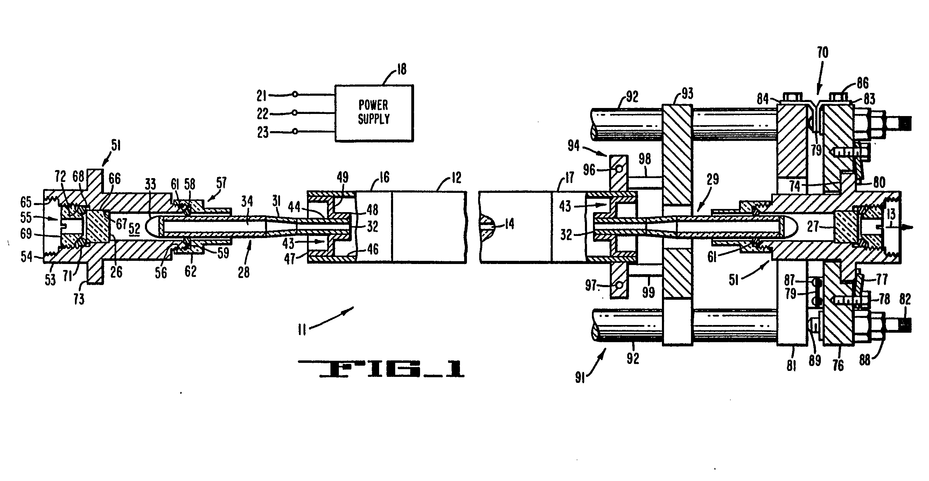

Briefly stated, the present invention is directed to a laser apparatus for generating a directed beam of coherent radiation. While a preferred embodiment of the present invention is described as arranged for use with a particular gas ion laser, the present invention is adaptable for use with solid state and other gas laser media devices. Fig. 1 illustrates the principal elements of a gas ion laser apparatus 11 used in the preferred embodiment of the present invention. The principal elements are found in all lasers, although they usually differ in specific construction in different types of lasers. Every laser 11 includes a structure 12 for confining a lasable medium along a laser beam path, indicated by arrow 13. The lasable medium, which may be in the form of a gas or solid medium, includes quantum resonant particles that, upon excitation, produce coherent radiation at one or more selected frequencies in the infrared, visible and ultraviolet range of the frequency spectrum. In a gas ion laser apparatus, an ionizable gas, such as argon, is confined at a pressure of about 1.33 mbar (1 Torr) within an enclosure, such as a gas discharge bore 14 defined by an elongated plasma tube structure 12 to extend along the laser beam path 13. Cathode and anode electrode structures 16 and 17, respectively, are provided at opposite ends of the plasma tube 11 for initiating and maintaining an electrical discharge in the lasable argon medium. The cathode electrode structure 16 typically includes a directly heated cathode that is heated by an AC current generated by a power supply 18 and coupled to the cathode by terminals 21 and 22. An electrical discharge is initiated in the lasable gas medium by a high voltage pulse generated by the power supply 18 and applied between the anode and cathode electrodes by terminal 23 coupled to the anode and by terminals 21 and 22 coupled to the cathode, terminals 21 and 22 being at a common DC potential. The electrical discharge is maintained between the cathode and anode electrodes by a DC voltage generated by the power supply 18 and applied between the anode and cathode electrodes by terminal 23 coupled to the anode and by terminals 21 and 22 coupled to the cathode.

Mirrors 26 and 27 are supported in opposition to each other at opposite ends of the plasma tube 12 along the laser beam path 13 to reflect the laser radiation back and forth through the gas discharge bore 14 to effect lasing action within the confined lasable gas medium. The mirrors and elongated plasma tube 12 form a resonator structure that produces a laser beam of coherent radiation propagated along the laser beam path 13. One or both of the mirrors 26 and 27 are made partially transparent to the generated coherent radiation so that the laser beam can be transmitted along path 13 to a utilization device. In gas laser apparatus embodiments having their mirrors 26 and 27 supported outside the plasma tube structure 12, Brewster window assemblies 28 and 29 are provided at opposite ends of the plasma tube structure to pass the coherent radiation generated within the gas discharge bore 14 to the mirrors. Each of the Brewster window assemblies includes a tubular enclosure 31 defining a channel 34 extending along the laser beam path 13 from an open end 32 supported at the plasma tube to a radiation transmissive window 33 supported at the opposite end of the enclosure. Coherent radiation generated by the lasing gas medium within the gas discharge bore 14 passes along the channel 34 to the windows 33. The windows are selected to pass coherent radiation polarized in a preferred direction and are oriented relative to the laser beam path so that preferentially polarized coherent radiation is transmitted to the associated mirrors. The laser apparatus 11 includes a support structure for supporting the laser elements so that the generated laser beam is maintained along a desired path 13 with a high degree of stability.

A preferred embodiment of the present invention will now be described in detail as employed in an air cooled gas ion laser apparatus 11. The elongated plasma tube 12 is a cylindrical body, preferably constructed of ceramic material, such as beryllium oxide (BeO), having high thermal conductivity and good vacuum properties. The cylindrical BeO body forming the plasma tube 12 defines a long, longitudinally extending cylindrical bore 14 at its center that forms the gas discharge path. Gas return paths (not shown) communicating with the bore 14 may be provided internally within the BeO body or by a separate structure externally thereof. During assembly of the laser apparatus 11, a lasable gas medium is admitted to the cylindrical bore 14 through a suitable inlet (not shown) at one end of the plasma tube 12.

Opposite ends of the BeO plasma tube 12 are brazed to coaxially extending metal cylinders forming the housings for the cathode and electrode structures 16 and 17. The metal cylinders are, preferably, of a material, such as the metal alloy sold under the trademark "Kovar", having a low coefficient of thermal expansion similar to the material used in construction the plasma tube 12.

In a preferred form of the Brewster window assemblies 28 and 29, the tubular enclosure 31 is a unitary, hollow cylindrical body of a composite metal/glass construction, starting with a metal segment at the open end 32 of the enclosure 31, followed by a glass graded seal segment at the midsection of the enclosure and ending with a glass segment at the end of the enclosure terminating at the Brewster window 33. In Fig. 1 of the drawings, this composite construction is represented by using simple cross hatching along the metal segment of the cylindrical enclosure, cross hatching with alternate broken lines to symbolise glass for the remainder of enclosure, and junction lines between the three segments.

Such Brewster window assemblies are expen- . sive and fragile. Therefore, care must be taken in mounting and supporting such assemblies to avoid damaging or destroying them. In this regard, each Brewster window assembly 28 and 29 is joined at its open end 32 to one of the metal cylinders 16 and 17 by a circular metal flange 43 radially extending between the outer surface 44 of the metal section of the cylindrical enclosure 31 and the inside surface 46 of the metal cylinder. The flange 43 defines a circular aperture at its center for receiving the open end 32 of the cylindrical enclosure 31 and has a pair of lips 47 and 48 oppositely extending perpendicularly from a radially extending interconnecting web 49 at the periphery and about the circular aperture, respectively, of the flange. The lip 47 nests with the inside surface 46 of the metal cylinder and the lip 48 encircles to nest with the outer surface 44 of the cylindrical enclosure 31 at its open end 32. Hermetic seals are formed between the flange 43 and the encircled enclosure 31 and encircling metal cylinder 16 by weld or braze joints at their mating surfaces. The hermetically sealed plasma tube 12 and Brewster window assemblies 28 and 29 confine the lasable gas medium to the space defined by the communicating plasma tube bore 14 and channel 34 and prevent escape of the lasable medium to the surroundings as well as entry into the space of contaminants from the surrounding environment.

The mirrors 26 and 27 are retained in mirror housing assemblies 51 that are supported to extend from Brewster window assemblies 28 and 29, respectively, without placing a substantial load on them. The housing assemblies 51 extend along the laser beam path to form contamination-free passageways 52 for the laser beam between Brewster window assemblies 28 and 29 and the mirrors 26 and 27, respectively. The presence of contaminants in the passageway 52 can cause radiation losses due to reflection and absorption of the generated radiation by the contaminants. The housing assembly 51 includes a rigid, elongated cylindrical tubular segment 53 defining a counter bore 55 at one end 54 for receiving and supporting a mirror and an externally threaded rigid neck segment 56 at the opposite end for surrounding the Brewster window end of the cylindrical enclosure 31 and joining the housing assembly 51 thereto. A flexible seal is employed to join the housing assembly 51 to the cylindrical enclosure 31 in a manner that permits the housing'assembly to move relative to the cylindrical enclosure generally in the direction of the length of the cylindrical enclosure. The flexible seal includes a rigid collar member 57 encircling the cylindrical enclosure 31 with a shoulder 58 facing towards a tapered end surface 59 of the neck segment 56. The shoulder forms a seat for a resilient O-ring seal 61 and the end surface is tapered to form a seal face that faces toward the cylindrical enclosure and seat. A seal is formed between the housing assembly 51 and cylindrical enclosure 31 by threading an internally threaded extension 62 of the collar member 57 onto the neck segment 56, which is provided with external mating threads. This presses the O-ring seal 61 between the seal face 59 and seat 58 and forces it against the cylindrical enclosure 31 to form the seal. The housing assembly 51, collar member 57 and resilient O-ring seal are dimensioned and the collar member 57 is threaded onto the neck segment 56 with a force that permits limited movement between the housing assembly/collar member structure and the cylindrical enclosure 31 of the encircled Brewster window assembly without breaking the seal. For example, as will be explained in detail hereinbelow, the mirror housing assembly is mounted to permit it and the retained mirror to be tilted a limited amount relative to the laser beam path 13 for purposes of angularly aligning the retained mirror relative to the laser beam path. When the housing assembly is moved in this manner, the O-ring seal 61 moves along the outer surface of the cylindrical enclosure 31 a corresponding amount in the direction of the laser beam path 13.

The counter bore 55 defined at the end 54 of the housing assembly 51 has a first part 66 of a selected first diameter that extends for a selected length from its bottom end 67 towards the end 54 of the housing assembly 51. The bottom end 67 of the counter bore 55 forms a seat against which the mirror 26 rests and the first diameter of the counter bore is selected so that the mirror is snuggly received therein. The length of the first part 66 of the counterbore 55 is selected to be less than the corresponding dimension of the seated mirror 26 so that the seated mirror extends into a second part 68 of the counter bore towards the end 54 of the housing assembly 51. The second part 68 of the counter bore 55 has a second diameter larger than the diameter of the first part 66 of the counter bore. The second part 68 of the counter bore has a threaded length for receiving an externally threaded sealing ring 69 and a smooth surface length adjacent the first part 66 defining a seat for an O-ring seal 71. The sealing ring 69 has a tapered end surface 72 forming a seal face that faces towards the back side of the mirror 26 and the wall of the counter bore. The centrally located aperture formed by the sealing ring permits the laser beam to pass from a partiatty transparent mirror to an exteriorly located utilization device. A seal is formed between the housing assembly 51 and mirror 26 by threading the sealing ring 69 into the counter bore 55 to press the O-ring seal 71 between the seal face 72 and the facing mirror 26 and counter bore wall surfaces. This seal together with the flexible seal provided at the neck segment 56 of the housing assembly 51 prevent contaminants from the surrounding environment from reaching the Brewster window 33, the reflecting surface of the mirror 26 and the passageway 52 defined therebetween.

The housing assembly 51 in the illustrated embodiment of the present invention is a straight, cylindrical housing having no other optical elements located between the Brewster window 33 and mirror 26. In some laser applications, however, it is desired to direct the laser beam along a path extending at an angle to the plasma tube 12. For such applications, the housing assembly 51 includes an extension that intersects the tubular segment 53 at the end 54 at the desired angle. A mirror, prism or other beam directing element is mounted at the intersection to redirect the laser beam along the angularly extending path. To protect those optical elements from the adverse effects of contaminants of the surrounding environment, the O-ring seal 68 and related sealing structure are relocated at the location of the other beam directing element to form a seal between it and the surrounding environment. Depending on the application, the O-ring seal 71 may be relocated with or without relocating the laser resonator mirror 26. A further internally threaded part 65 is provided at the end of the counter bore 55 for coupling the laser apparatus 11 to a utilization device.

Various kinds of resonator support assemblies can be utilized in the apparatus of the present invention to support the mirror housing assemblies 51 and other components forming the laser resonator structure without placing undue strain on the Brewster window assembly. Rod structures and L-shaped brace structures are-the most common forms of resonator support assemblies utilized to support laser resonator structure. The preferred embodiment of the present invention will be described in detail with reference to an arrangement employing a rod- type resonator support assembly. Reference is now made to Figs. 1 and 8, which together illustrate a preferred way of supporting the mirror housing assemblies 51 in a manner that minimizes the load placed on the associated Brewster window assemblies 28 and 29. Each mirror housing assembly includes a rigid, circular flange 73 encircling its cylindrical tubular segment 53 to extend outwardly therefrom at a location along its length proximate the mirror location. The circular flange 73 is seated within a recess 74 defined by a mirror housing assembly mounting plate 76 (Fig. 8) of a tuning assembly 70. The depth of the recess 74 is selected so that the flange 73 extends beyond the surface of the plate 76 to be engaged and held in the recess securely by a plurality of dogs 77 fastened to the plate 76 by screws 78. The diameter of the recess 74 is selected to be larger than the diameter of the flange 73 so that the housing 51 and retained mirror can be adjusted transversely of the laser beam path 13 for alignment purposes. A pair of eccentrically mounted cams 80 are secured by bolts 85 to the plate 76 along the edge of the bottom half of the recess 74 for effecting such alignments.

Three leaf springs 79 join the mounting plate 76 to a tuning reference mounting plate 81 firmly secured to the plasma tube 12 and cooperate with tuning screws 82 to permit the separation of the plates 76 and 81 to be adjusted so that the facing angle of the retained mirror relative to the laser beam path 13 can be adjusted for alignment and tuning purposes within a limited solid angle about the laser beam path. The leaf springs 79 are spaced from one another to extend between the plates 76 and 81 at three perimeter locations. Referring to Fig. 8, the three leaf springs 79 are arranged so that straight lines drawn respectively between the two lower most leaf springs and between the two leaf springs located to the right intersect one another at a right angle. Each leaf spring 76 is formed by two leaf portions 83 and 84, one of which is fastened to plate 76 and other to plate 81 by screws 86. The leaf portions extend between the two plates 76 and 81 generally transversely with respect to the direction of movement of the tuning screws and are fastened together at their opposite ends by rivets 87 so that the leaf spring 79 is in tension between the plates.

A tuning screw 82 is located closely adjacent each leaf spring 79 to maintain the plates 76 and 81 spaced apart as they are urged toward one another by the tensioned leaf spring. Each tuning screw threadingly engages and passes through a shaft lock mechanism 88 that extends through and is secured to the mirror housing assembly mounting plate 76. The tuning screw terminates at a bearing end 89 which bears against the facing surface of the reference plate 81.

The angular position of the mirror retained in the housing assembly 51 is adjusted relative to the laser beam path 13 by advancing the tuning screws against or retracting them from the reference plate 81. Adjusting the upper right (as seen in Fig. 8) tuning screw tilts the plate 76 about the line extending between the two lower most leaf springs. Adjusting the lower left tuning screw tilts the plate 76 about the line extending between the two leaf springs located along the right edge of the plate 76. These two tuning screw adjustments provide the desired orthogonal adjustment of the mirror position relative to the laser beam path 13 whereby the angle of the face of the mirror relative to the laser beam can be adjusted within a limited solid angle about the laser beam. By adjusting the lower right tuning screw, the plane of the mirror housing assembly mounting plate 76 is adjusted relative to the reference plate 81, thereby, varying the length of the resonant cavity. After the retained mirror is placed in the desired angular position, the tuning screws can be locked in position by the shaft locks 88. A more detailed description of the tuning assembly 70 can be had by reference to our U.S. Patent 3,864,029.

In the preferred embodiment of the present invention, the reference plate 81 forms an end plate of a resonator support assembly 91 that provides support for the entire laser apparatus 11. As shown in Fig. 1, the resonator support assembly 91 includes a plurality of long rods 82 firmly secured to and extending from the reference plate 81 by cooperating set screws and anaerobic adhesive (not shown in Fig. 1). Three rods are employed and they extend snugly through the reference plate to form parts of the reference plate surface facing the three tuning screws 82, the rods being in general end-to-end alignment with the three tuning screws 82 so that the screws bear against the ends of the rods. The rods are of a material having a low coefficient of thermal expansion. A metal alloy sold under the trademark "Invar" is a suitable material for fabricating the rods. An upright or support plate 93 is firmly secured to the three rods 92 at a distance from the reference plate 81 and is joined to a split yoke assembly 94 (only bottom half shown in Fig. 1) that supports the plasma tube 12 proximate the free end of the cylindrical electrode housing 17. The two halves of the split yoke assembly 94 are clamped to the housing 17 by bolt fasteners (not shown in Fig. 1) that extend through the bolt holes 96 and 97 located in the split yoke assembly on each side of the housing 17. Two blocks 98 and 99 of insulating material are fastened between the support plate 93 and the lower half of the yoke assembly 94 on each side of the plasma tube 12 by screws (not shown in Fig. 1) and serve to secure the plasma tube 12 to the support plate 93, hence, the resonator support assembly 91, while electrically isolating the resonator support assembly from the plasma tube.

By virtue of the flange 43 extending between the plasma tube 12 and the Brewster window assembly 29, the resonator support assembly 91 supports the Brewster window assembly 29 firmly at its open end 32 in a cantilevered manner. The resonator support assembly 91 also supports the mirror housing assembly 51 firmly at its flange 73 in a cantilevered manner. While the Brewster window assembly 29 and mirror housing assembly 51 are coupled together at the O-ring seal 61 close to their free ends, the cantilevered supports are arranged to bear the entire load of the Brewster window assembly and mirror housing assembly so that only minimal load is placed on the Brewster window assembly by the mirror housing assembly.

A detailed description of the laser apparatus 11 according to a preferred embodiment of the present invention will now be given with reference to the air cooled gas ion laser apparatus illustrated in Figs. 2-11. In the illustrated preferred embodiment, the BeO tubular body 12, anode and cathode structures 16 and 17, Brewster window assemblies 28 and 29, and mirror housing assemblies 51 form a gas ion laser resonator that is supported to generate and direct a laser beam along the path 13 (see Fig. 1). Furthermore, the laser resonator and all other parts of the laser apparatus 11 are supported relative to an exterior reference base (not shown), typically, a user-supplied optical bench, by the_{'} resonator support assembly 91 designed to provide structural strength and stability. In this regard, the resonator support assembly isolates the supported laser resonator from the effects of disturbances and dimensional changes that occur in the other parts of the laser apparatus 11 or the user supplied exterior reference base as a result of thermal and mechanical stresses.

The resonator support assembly includes the three parallelly extending rods 92 spaced about the plasma tube 12, the uprights or anode and cathode end support plate members 93 and 101 fastened to the rods 92 adjacent the anode and cathode electrode structures 16 and 17, respectively, at opposite ends of the plasma tube 12, and the anode and cathode end mirror tuning assemblies 70 and 102 respectively fastened to the opposite ends of the rods 92. As can be seen by reference to Figs. 6-9, which are elevation views of the support plates and tuning assemblies, the three rods 92 extend in the spaced apart parallel relationship between three corners of the support plates 93 and 101 and tuning assemblies 70 and 102 and form with the support plates a trestle for supporting the components forming the laser resonator. The uprights 93 and 101 form the trestle support and the three rods 92 form a connecting bridge between the uprights.

Isolation of the laser resonator from the effects of disturbances and dimensional changes that occur in other parts of the laser apparatus 11 or the exterior reference base is provided at the uprights or support plates 93 and 101. Referring to Figs. 2, 6 and 7, the support plates 93 and 101 are secured to the three rods 92 snugly passing through them by set screws 103 in combination with an anaerobic adhesive to maintain the rods and support plates securely in a fixed position relative to each other. Each support plate includes a pair of vertically spaced rigid segments joined together by a flexible coupling means that permits the lower rigid segment of each support plate to move a limited amount without causing objectionable movement of the upper rigid segment. In one of the support plates, namely, plate 93, the flexible coupling means is fastened between the vertically separated rigid segments so that such movement can occur in the direction of the longitudinally extending rods 92. In the other support plate 101, the flexible coupling means is fastened between the vertically separated rigid segments so that such movement can occur in a direction horizontally transverse to the direction of the longitudinally extending rods 92. With the flexible coupling means arranged in the foregoing manner, the support plates 93 and 101 can be directly secured to a reference base that experiences limited dimensional changes in orthogonal directions and the laser resonator will be isolated from them.

Figs. 2 and 6 together illustrate the construction of the anode end support plate 93 that permits the limited relative movement between the laser resonator and reference base in the direction of the longitudinally extending rods 92. As shown therein, a strip 104 of flexible material extends nearly the entire width of the support plate 93 along one side thereof to join a lower rigid segment 106 of the plate to an upper rigid segment 107. A plurality of bolts 108 pass through the flexible strip 104 along its lower and upper sides and are threaded into the lower and upper rigid segments 106 and 107 of the support plate to fasten the flexible strip securely against the vertically extending surfaces of the segments. The lower rigid segment 106 has a pair of spaced apart legs 109 and 111 for supporting the plate 93 at the reference base, with the legs 109 and 111 defining threaded holes 112 and 113, respectively, at their bottoms (see Fig. 3) for receiving bolts to secure the support plate 93 to the reference base. In this arrangement, the flexible strip 104 has freedom of limited movement in the direction of the longitudinally extending rods 92.

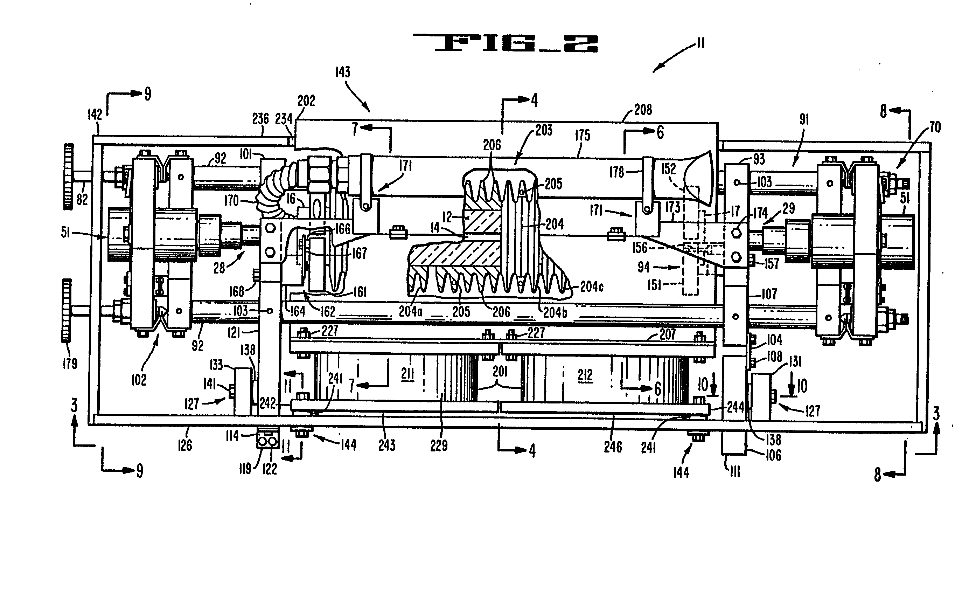

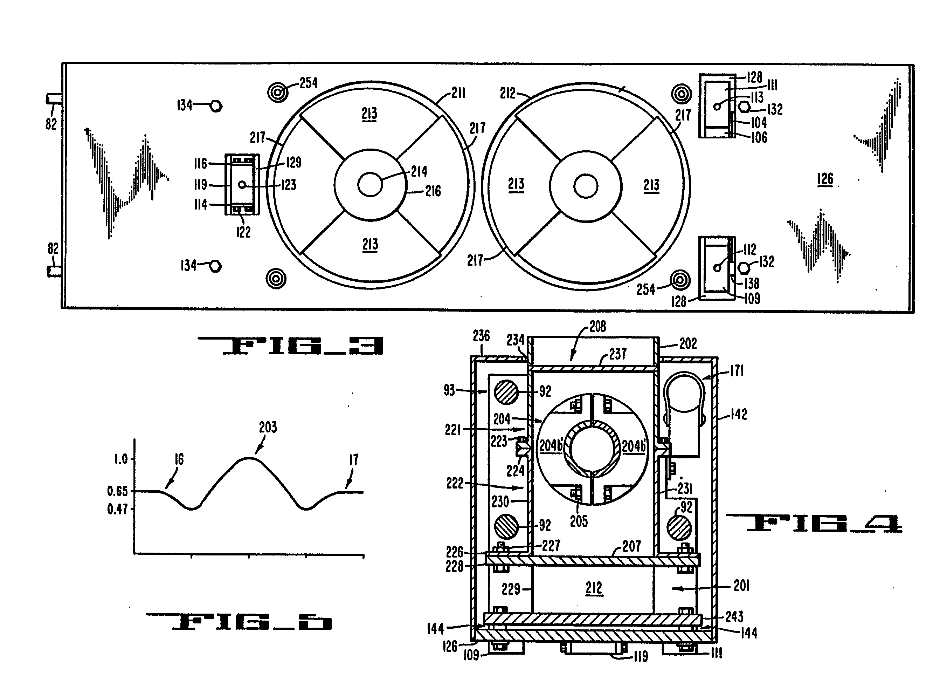

Referring to the cathode end support plate 101 illustrated in Figs. 2 and 7, it permits the limited relative movement between the laser resonator and reference base in the direction horizontally transverse to the direction of the longitudinally extending rods 92. As shown therein, a pair of angle brackets 114 and 116 of flexible material extend, respectively, from the opposite ends 117 and 118 of the lower rigid segment 119 of the support plate 101 to the bottom of the upper rigid segment 121 of the support plate. The flexible angle brackets 114 and 116 are fastened securely against the segments 119 and 121 by bolts 122 passing through the two angularly extending bracket members and threaded into the two segments. The lower rigid segment 119 supports the plate 101 directly at the reference base and defines a threaded hole 123 at its bottom (see Fig. 4) for receiving a bolt to secure the support plate 101 to the reference base. In this arrangement, the flexible angle brackets 114 and 116 have freedom of limited movement in a direction horizontally transverse to the longitudinally extending rods 92.

It should be appreciated that the flexible coupling means can be omitted and unsegmented uprights or support plates 93 and 101 employed in embodiments of the present invention intended for use in applications where the laser apparatus is not secured to the reference base or in applications where no objectionable relative movement will occur between the reference base and the laser apparatus.

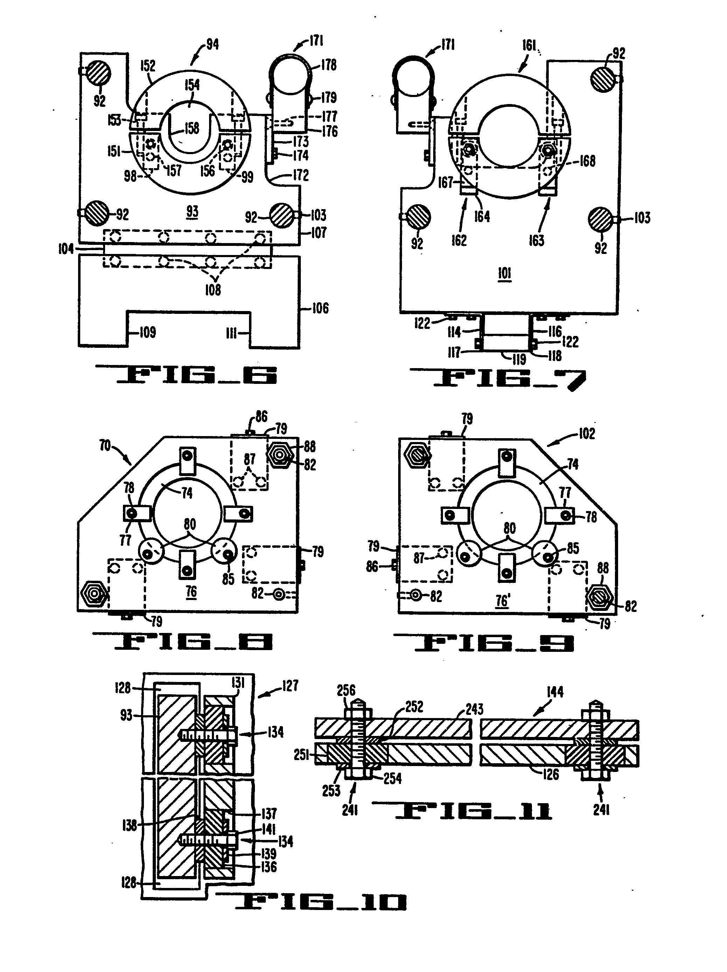

In the laser apparatus 11 of the present invention, a platform 126, serving as a chassis for supporting components of the laser apparatus other than the resonator, also is supported at the anode and cathode end support plates 93 and 101. To isolate the support plates and laser resonator from disturbances that occur in the platform 126, or that are transmitted to it by other components of the laser apparatus 11 supported thereby, such as a housing structure and a cooling mechanism, a flexible coupling means 127 is employed to join the platform 126 to the two support plates. The details of a preferred embodiment of the flexible coupling means 127 is illustrated in Fig. 10 as employed to fasten the platform 126 to the anode end support plate 93 of the resonator support assembly 91. The platform 126 is similarly fastened to the cathode end support plate 101. The structural relationship of the preferred flexible coupling means embodiment relative to the laser apparatus as a whole is shown in Figs. 2 and 3.

To join the platform 126 to the anode end support plate 93 while allowing the support plate to extend to the reference base, the platform defines a pair of rectangular holes 128 dimensioned to allow the legs 109 and 111 of the support plate 93 to pass therethrough (Fig. 3). A single hole 129 is provided in the platform 126 to permit the lower rigid segment 119 of the cathode end support plate 101 to pass through the platform. A vertically standing wall 131 (Fig. 2) is fastened to the platform 126 by bolts 132 (Fig. 3) to extend across the width of the platform 126. The wall 131 is positioned adjacent to the in-line edges of the holes 128 at the side of the support plate 93 facing away from the anode end of the plasma tube 12. A similar wall 133 (Fig. 2) is fastened to the platform 126 by bolts 134 (Fig. 3) adjacent to an edge of the hole 129 at the side of the cathode end support plate 101 facing away from the cathode end of the plasma tube 12.

The walls 131 and 133 are joined to the adjacent support plates 93 and 101, respectively, by flexible coupling means 127 in the form of shock absorbing couplers. More particularly, and referring to Fig. 10, a pair of shock absorbing couplers 134 join the wall 131 to the anode end support plate 93 at locations proximate the opposite ends of the wall 131. Each shock absorbing coupler 134 includes a bushing 136 of elastic material, such as silicon or rubber, retained by the wall 131 in a hole passing therethrough and fastened by an adhesive to the surrounding surface 137 of the wall 131 defining the hole. The elastic bushing 136 is sandwiched between a rigid spacer 138 and rigid washer 139. A bolt 141 passes through the sandwiched bushing 136 and is threaded into the support plate 93 to fasten the sandwiched bushing thereto, with the spacer positioned between and bearing against both the support plate 93 and elastic bushing 136 and the washer 139 between and bearing against both the head of the bolt and elastic bushing 136. Thus, the elastic bushing 136 is gripped between the spacer 138 and washer 139 and held in place relative to the bolt 141. The spacer 138 prevents contact between the support plate 93 and the adjacent wall 131 and, thereby, provides bushing support for the plate 93.

Any limited movement of the platform 126, for example, as may be caused by shocks, vibrations, dimensional disturbances or the like, are absorbed by the elastic member 136 of the shock absorbing couplers 134 without transmitting corresponding objectionable disturbances to the support plates 93 and 101, hence, the laser resonator. This isolates the laser resonator from disturbances that occur in the platform 126, or that are imparted thereto by the other components of the laser apparatus carried by the platform, which otherwise would cause undesirable detuning of the laser resonator, misalignment of the laser beam and/or modulation of the laser beam. Both mechanically and thermally induced disturbances capable of causing the aforementioned undesirable effects commonly occur in laser application environments. For example, changes in the temperature equilibrium of the platform 126 can produce dimensional changes in the platform that are capable of stressing the resonator support structure and, thereby, produce disturbances in the laser resonator that cause detuning and laser beam misalignment. Also, impacts received by the platform 126, or the laser housing 142 joined to the platform, can produce momentary disturbances that can give rise to momentary undesirable effects. In laser apparatus including means 143 supported by the platform 126 for cooling the plasma tube 12, vibrations are produced by the cooling means and imparted to the platform. Such vibrations can cause undesirable modulation of the laser beam as well as other undesirable effects. However, as will be described in further detail hereinbelow with reference to Fig. 11, the air cooled laser embodiment of the present invention also includes flexible coupling means 144 joining the air cooling means 143 to the platform 126 that permits limited movement of the air cooling means relative to the platform 126. This flexible coupling means 144 cooperates with the flexible coupling means 127 joining the platform 126 to the support plates 93 and 101 to isolate doubly the support plates 93 and 101 from the vibrating air cooling means.

With the presence of the flexible coupling means in the support plates 93 and 101 and the flexible coupling means joining the support plates to the platform 126 and other laser apparatus components, the laser resonator is supported by the support plates to be free of disturbances commonly experienced in laser apparatus. Referring again to Figs. 2, 6 and 7, the upper segment 107 of the anode and support plate 93 supports the split yoke assembly 94 at a side of the support plate facing the plasma tube 12. The split yoke assembly 94 is horizontally bisected to include a lower half segment 151 and an upper half segment 152 clamped about the cylindrical anode electrode housing 17 by bolts 153 to secure the anode end of the plasma tube to the resonator support assembly 91. To avoid establishment of an electrical short circuit across the plasma tube 12 or to ground through the resonator support assembly 91, the split yoke assembly 94 is joined to the support plate 93 by the two blocks of insulating material extending between the lower half segment 151 of the yoke assembly and the support plate, with one block located on each side of the yoke aperture 154. Each insulating block is fastened to the support plate 93 and to the yoke segment 151 by a pair of screws 156 and 157, one, viz. 156, threaded into the lower half segment 151 from the insulating block and the other, viz. 157, threaded into the lower half segment from the support plate 93. The insulating blocks 98 and 99 are fastened to the support plate 93 and yoke segment 151 to register the yoke aperture with a recess 158 formed along the top edge of the support plate 93. The recess 158 provides clearance for passage by the Brewster window assembly 29 (see Fig. 1) that is cantilevered at the anode electrode structure 17 clamped by the split yoke assembly 94.

As can be seen by referring to Figs. 2 and 7, the cathode end support plate 101 is constructed similarly as the anode end support plate 93 and supports another split yoke assembly 161 like the split yoke assembly 94 supported by the support plate 93. However, the split yoke assembly 94 is joined to the cathode end support plate 101 by a pair of flexible insulating block assemblies 162 and 163 at each side of the yoke assembly 161. Each block assembly includes a pair of vertically spaced rigid block members 164 and 166 of insulating material connected together by a strip 167 of flexible material, with the flex plane of the strip facing in the direction of the length of the plasma tube. A plurality of bolts 168 join the block members and strip together to form the flexible insulating block assembly. They also join the assembly to the yoke assembly 161 and support plates 101 so that the plasma tube 12 secured to the cathode end support plate 101 can move a limited amount in its length relative to the support plate for accommodating longitudinal displacements occurring in the tube relative to the plate. Such displacements commonly occur as a result of changes in the thermal equilibrium of the plasma tube.

The upper segment 121 of the cathode end support plate 101 also differs a little from the upper segment 107 of the anode and support plate 93. As can be seen by comparing Figs. 6 and 7, a recess formed along the top edge of the support plate 101 is larger than that found in the support plate 93. The increase in size of the recess provides room for passage to the cathode electrode housing 16 of a flexible gas line 170 extending from a gas revervoir or tank 175 and cathode voltage lead lines extending from the power supply 18 (Fig. 1) of the laser apparatus 11.

Both support plates 93 and 101 are provided with a strap mounting assembly 171 for supporting the gas tank 175 at a side of the resonator support assembly 91. As seen in Fig. 6, each strap mounting assembly 171 is mounted at a recessed edge portion 172 of the support plate and includes a support bracket 173 fastened at one end to the support plate 93 by bolts 174 to extend towards the other support plate 101. A support block 176 is secured to the opposite extended end of the bracket 173 by a screw 177. The gas tank 175 rests and is held against the support block 176 by an encircling strap 178 fastened at its opposite ends to the support block 176 by screws 179.

Figs. 8 and 9 illustrate the anode and cathode and tuning assemblies 70 and 102 fastened to opposite ends of the rods 92, looking onto their respective mirror housing assembly mounting plates 76 and 76'. Except for two minor differences, the tuning assemblies 70 and 102 are identical. The cathode end tuning assembly 102 has longer tuning screws 82 and is provided with tuning knobs 179 to enable convenient tuning of the laser apparatus 11 by the operator. Therefore, the same reference numbers are used in both Figs. 8 and 9 to identify like parts of the two tuning assemblies.

To remove objectionable heat generated by the laser apparatus 11 during the lasing action, the air cooled laser apparatus 11 of the present invention includes an air supply 201 and air duct 202 arrangement forming the cooling means 143 that is productive of efficient cooling of the structure of the laser apparatus defining the lasing region. Efficient cooling is achieved by forming an air flow being differently distributed along the direction of the laser beam path so that a greater volume of air is directed over parts of the laser apparatus 11 where most heat is generated. For example, in gas ion lasers, the heat generating lasing action occurs in the region extending along the plasma tube 12 between the cathode and anode electrode structures 16 and 17. Most power is dissipated and heat generated at those electrode structures and along a midsection 203 of the BeO plasma tube 12. In one air cooled laser apparatus 11 constructed in accordance with the present invention to provide 75 milliwatts of output power, 60 watts of power was dissipated at the cathode and anode electrode structures 16 and 17 and 1000 watts was dissipated along the BeO plasma tube midsection 203.

To remove the resulting heat generated by such concentrated power dissipation of a preferred embodiment of the present invention includes a thermally conductive cooling fin structure 204, for example, of aluminum material, encircling the plasma tube 12 in a thermally conducting relationship from the cathode electrode structure 16 to the anode electrode structure 17. More specifically, the cooling fin structure 204 includes a plurality of spaced apart fins 206 encircling the plasma tube 12 to extend transverse to the gas discharge bore 14 to define between the fins air flow paths along the plasma tube that extend transverse to the bore. Each cooling fin 206 has a thickness that varies along its length from a maximum closest to the bore 14 to a minimum at its tip. The thickness variation of the fins 206 enhances the thermal conduction along the length of the fins and increases the fin surface area exposed to the cooling air. Each of these structural features of the fins improves the rate of cooling.

To avoid establishment of an electrical short circuit across the plasma tube 12 or to ground through the electrically conductive cooling fin structure 204, the cooling fin structure is divided in its length into three adjacently disposed sections 204a, 204b and 204c. The sections are spaced apart from each other along the length of the plasma tube 12 a distance that is sufficient to prevent an electrical discharge between adjacent sections, with the cooling fin section 204a encircling the cathode electrode structure 16, the cooling fin section 204b encircling the midsection 203 of the BeO plasma tube 12 and the cooling fin section 204c encircling the anode electrode structure 17. The cooling fin structure 204 is joined to the plasma tube 12 with a thermally conductive, compound (not shown), such as Thermal Joint Compound, type 12, provided by Wakefield Engineering, Inc., sandwiched therebetween to enhance the conduction of heat from the plasma tube 12 to the three cooling fin sections.

In a preferred embodiment of the cooling fin structure 204, each cooling fin section is longi- .tudinally bisected along its length to form two separate half sections, such as sections 204b' shown in Fig. 4. Bisecting the cooling fin sections facilitates assembling the plasma tube 12 within the cooling fin structure 204. The bisected cooling fin sections are held together by nut and bolt fasteners 205 at diametrically opposite sides of the sections.

By arranging the cooling fins 206 to form air flow paths transverse to the use discharge bore 14 along the plasma tube 12, unheated cool air can be delivered to the cooling fins along the entire length of the plasma tube. In the air cooled laser apparatus according to the preferred embodiment of the present invention, advantage is taken of this air flow path design. More specifically, the air supply 201 and air duct 202 are arranged to establish an air flow over and in the direction of the transversely extending cooling fins having air distributed therein in the direction of the gas discharge bore 14 so that a greater volume of air is delivered over the fins encircling the cathode and anode electrode structures 16 and 17 and the fins encircling the midsection 203 of the plasma tube 12 than elsewhere. By distributing the air flow in this manner, a most efficient removal of heat is realized because the delivery of cooling air is concentrated at those parts of the plasma tube 12 generating the most heat. Furthermore, such efficient removal of heat is facilitated in the preferred embodiment of the present invention by constructing the air duct 202 to form a straight line air flow path extending between an air intake port 207 and an air exhaust port 208 located at opposite sides of the plasma tube 12. In addition, the intake port 207 and exhaust port 208 are constructed to define large openings extending the entire length and width of the portion of the plasma tube 12 to be cooled so that the air supply 201 can be arranged to deliver an air flow to the cooling fin structure 204 along a straight line over the entire length of the cooling fin structure. This avoids the establishment of restrictions in the air flow path that tend to produce unwanted regions of reduced air flow, and unwanted regions of dead air space. Such regions reduce the cooling efficiency, particularly if they occur at locations of the plasma tube 12 where a substantial quantity of heat is generated. Furthermore, in the preferred embodiment of the air supply 201, axial flows fans are employed to generate the air flow of desired air volume distribution. As compared with some other air supply devices, axial flow fans are easily loaded down by restrictions in the air flow path, whereby the air flow can be severely reduced. Employing the large intake and exhaust ports minimizes the risk of loading down the axial flow fans. The axial flow fans also can be loaded down if insufficient space is provided below them to draw in air from which the air flow over the cooling fins is formed. To provide such space, a pair of holes 191 and 192 (Fig. 3) are cut in the platform 126 and the two axial flow fans are mounted to the platform in alignment with them. Also, the support plates 93 and 101 are extended below the platform 126 a sufficient distance so that a clearance is established between the platform and the surface above which it may stand that provides an unrestricted air flow to the fans. The required distance can be determined empirically by varying the distance and observing the operation of the axial flow fans.

While various air supply means 201 and/or air duct means 202 can be arranged to establish the desired air flow distribution over the cooling fin structure 204, the desired air flow distribution can be conveniently and inexpensively formed through the use of two particularly arranged axial flow fans 211 and 212. More particularly, the two axial flow fans 211 and 212 are mounted to the platform 126 closely adjacent side-by-side in the direction of the extending plasma tube 12 (Fig. 2) in air flow communication with the air duct 202. The blades 213 of each fan radially extend from a hub 214 of its associated motor 216 (Fig. 3) to span a distance so that the tips 217 of the blades extend to define a tip path diameter aligned with the cathode and anode electrode structures 16 and 17 (Fig. 2) and the midsection 203 of the BeO plasma tube 12. Axial flow fans produce maximum air flow close to the tips 217 of their blades 213. By mounting the two fans closely adjacent side-by-side in the direction of the extending plasma tube 12, the two air flows established by the fans in the region between them combine to form a net air flow greater than either fan can produce in that region alone. Thus, the side-by-side fans establish a combined air flow over the cooling fin structure 204 whose volume is greatest in the region located about the midsection 203 of the BeO plasma tube 12 that coincides with the part of the laser apparatus 11 that generates the most heat. Furthermore, the fans separately establish lesser, but still high volume air flows over the cooling fin structure 204 in the regions located about the cathode and anode electrode structures 16 and 17, which coincide with the parts of the laser apparatus 11 that generate the next most quantity of heat. Fig. 5 graphically illustrates the average air volume distribution of the air flow established along the plasma tube 12 in one embodiment of the laser apparatus 11 constructed to have two axial flow fans 211 and 212 arranged in the side-by-side manner. The graphical representation is normalized to the average maximum air flow established over the midsection 203 of the plasma tube 12. As shown by the graph, the air flows established in the regions about the cathode and anode electrode structures 16 and 17 are at a volume which is, on the average, about 65% of that established at the midsection 203 of the plasma tube 12, while the air flows established in the regions between those locations are at a lesser average volume that reaches an average minimum of about 47% of that established at the midsection 203.

The two motor driven fans 211 and 212 are preferably coupled to the intake port 207 of the air duct so that the fan motors 216 are exposed only to ambient or cool air in establishing the desired air flow over the cooling fin structure 204. Locating the fans 211 and 212 at the intake port 207 has the advantage of permitting the use of inexpensive fans that need not be designed to function in elevated temperature environments. In addition to the aforementioned air flow distribution advantages characterizing the use of two, side-by-side fans as described above, the use of two fans also has the advantage of enabling fans of smaller blade diameter to be used in place of one fan of larger blade diameter to establish a desired air flow. Two fans of small blade diameter produce less audible noise and vibrations than one fan of large blade diameter generating a comparable air flow because the velocity of the tips of the blades of fans of smaller blade diameter is less than that of fans of larger blade diameter.

The heat removing ability of the air cooled laser apparatus 11 of the preferred embodiment of the present invention is further enhanced by establishing a turbulent air flow over the cooling fin structure 204 rather than a laminar air flow. A laminar air flow can form a thin layer of stagnate air along the cooling fin surfaces over which it passes. The formation of a stagnate layer of air along the cooling fin surfaces impedes the transfer of heat from the fins to the cooling air. On the other hand, a turbulent air flow disrupts the formation of such stagnate air layers, thereby bringing more cooling air into contact with the fins and increasing heat removal. In the preferred two-fan embodiment of the present invention described above, a turbulent air flow is generated by positioning each of the fans 211 and 212 so that the blades are spaced from the cooling fin structure 204 a distance less than the diameter of the path scribed by the tips 217 of the blades 213. Suitably the distance from the blades to the cooling fins is about one-half this diameter. Referring particularly to Fig. 4, the air duct 202 is formed of two rectangular upper and lower half sections 221 and 222. The two half sections are joined together by bolts 223 at flanges 224 extending the length of the air duct midway along its vertical extent. The air duct 202 is supported from the two fans 211 and 212 at the lower half section 222, which has a mounting flange 226 that is joined by nut and bolt fasteners 227 to rest on flanges 228 extending from the housing 229 of the fans. The rectangular air duct 202 extends vertically from the flanges 228 of the fan housing 229 with its side walls 230 and 231 between the resonator rods 92 and cooling fin structure 204 in a spaced, closely adjacent relationship with the cooling fin structure. The vertically extending air duct 202 extends through an aperture 234 provided in the top wall 236 of the laser housing 142 so that its exhaust port 208 vents the air duct exteriorly of the laser apparatus 11. A plurality of spaced bar members 237 (Fig. 4) extend across the width of the air duct 202 and serve as finger guards. Other finger guard means, such as grillwork, can be employed as well.

The end walls of the air duct are located closely adjacent and just beyond the cathode and anode electrode structures 16 and 17 and are provided with apertures (not shown) to permit the previously discussed Brewster window assemblies, split yoke assemblies, flexible gas line and cathode filament lead lines to pass through the end walls. With the air duct 202 constructed in this manner, the cooling air delivered to the intake port 207 by the fans 211 and 212 is substantially confined to flow through the paths defined between the spaced apart cooling fins 206.

To minimize the introduction of noise to the generated laser beam, the air duct 202 is arranged so that the resonator support rods 92, support plates 93 and 101 and all laser mirror assemblies 51, and all Brewster window assemblies 28 and 29 are located outside the duct 202 and air flow. With this arrangement, the cooling air flow does not strike elements of the laser apparatus 11 which, when disturbed, can introduce objectionable noise, usually, in the form of modulation to the generated laser beam.

As previously discussed with reference to Figs. 2 and 3, cooling mechanisms 143, particularly, air cooling devices, vibrate during operation, usually, because of the utilization of a motor having mechanically moving parts. To avoid transmitting the vibrations through the supporting platform 126 and support plates 93 and 101 to the resonator structure, which, as discussed hereinbefore, can cause modulation of the generated laser beam, the laser apparatus 11 of the present invention includes a flexible coupling means 144 supporting the air cooling means 143 relative to the platform 126. The flexible coupling means 144 are joined to the air cooling means 143 and a platform 126 so that the air cooling means is able to move a limited amount relative to the platform without producing corresponding objectionable movements or other disturbances in the platform. In one embodiment of the laser apparatus 11 of the present invention, a plurality of shock absorbing couplers 241 similar to the shock absorbing couplers 127 joining the platform 126 to the support plates 93 and 101 are employed, the details of which are illustrated in Fig. 11_{:}

Referring now to Figs. 2 and 11, two shock absorbing couplers 241 are joined between the platform 126 and a single edge 242 (Fig. 2) of the lower flange 243 extending from the housing 229 of the fan 211. Two shock absorbing couplers 241 are similarly joined between the platform 126 and a single edge 244 (see Fig. 2) of the lower flange 246 extending from the housing of the fan 212. It is not necessary to support the other facing edges of the lower flanges 243 and 246 by shock absorbing couplers because the upper flanges extending from the housings of the fans 211 and 212 are fastened along their facing edges to the airduct 202. Referring specifically to Fig. 11, each shock absorbing coupler 134 includes a bushing 251 of elastic material, such as silicon or rubber, retained by the platform 126 in a hole passing therethrough and fastened by an adhesive to the surrounding surface of the platform defining the hole. The elastic bushing 251 is sandwiched between a rigid spacer 252 and rigid washer 253. A bolt 254 passes through the sandwiched bushing 251 and flange 243 from the platform 126 and is secured to the flange and platform by a nut 256. The sandwiched bushing 251 is held securely against the flange 243 with the spacer 252 positioned between and bearing against both the flange 243 and the bushing 251 and with the washer 253 positioned between and bearing against both the head of the bolt 254 and bushing 251. Thus, the elastic bushing 251 is gripped between the spacer 252 and washer 251 and held in place relative to the bolt 254. The spacer 252 prevents contact between the platform 126 and the adjacent flange 243 and, thereby, provides bushing support for the fan 211 (see Fig. 2). As discussed hereinbefore, the flexible coupling means 144 (Fig. 11) cooperates with the flexible coupling means 127 (Fig. 10) joining the platform 126 to the support plates 93 and 101 to isolate doubly the support plates 93 and 101 from the vibrating air cooling means.

## Claims

1. An air cooled laser apparatus comprising:
a laser resonator including a structure (12, 16, 17) for confining a lasable medium and defining a lasing region between laser mirrors (26, 27) positioned in opposition to one another at spaced locations along a laser beam path;
a plurality of thermally conductive cooling fins (206) supported in a thermal conducting relationship with the structure of the laser resonator that confines the lasing medium to define air flow paths between adjacent ones of said fins, each of said cooling fins encircling said laser resonator structure and extending transverse to the laser beam path and air supply means (201) establishing an air flow along air flow paths transverse to the laser beam path that pass between said cooling fins; characterised in that
an air duct (202) is provided extending from an intake port (207) to an exhaust port (208) to enclose the cooling fins and define said air flow paths; and that said
air supply means (201) are coupled to at least one of the ports of the air duct for establishing an air flow from the intake port, between the cooling fins and to the exhaust port, said air flow being non-uniformly distributed along the direction of the laser beam path so that a greater volume of air flows through regions located about ends of the lasing region and a midpoint therebetween than elsewhere.

2. The air cooled laser apparatus of claim 1 wherein the air duct defines a straight line air flow path extending transverse to the laser beam path (13) from the intake port (207) to the exhaust port (208), the air supply means includes two motor driven axial flow fans (211, 212) coupled in air flow communication with one of said ports side-by-side in the direction of the laser beam path with their air flow axes facing in the direction of extent of the cooling fins, and each of said fans having a plurality of blades (213) having tips (217) that scribe a path aligned with the regions located about the midpoint and end of the lasing region.

3. The air cooled laser apparatus of claim 1 or claim 2 wherein the blades of each of the motor driven fans are spaced from the cooling fins a distance less than the diameter of the path scribed by the tips of said blades.

4. The air cooled laser apparatus of any one of claims 1 to 3 wherein said resonator is provided by a laser assembly having:
an elongated body (12) of electrically insulating material defining an elongate bore (14) along a laser beam path for enclosing a lasable gas medium;
electrodes (16, 17) secured to the electrically insulating body at opposite ends of the elongated bore for coupling to a voltage source to initiate and maintain lasing action in a lasing region within said elongated bore;
hermetic seals (31, 43) joined to the electrically insulating body (12) at opposite ends of the elongated bore to form an enclosure for the lasable gas medium hermetically sealed from the atmosphere ambient to said electrically insulating body; and
laser mirrors (26, 27) supported in opposition to one another at spaced locations along the laser beam path with the electrodes therebetween to define a resonant cavity for sustaining lasing action;
the laser apparatus further comprising a support assembly for supporting the laser assembly and having:
a plurality of rods (92) spaced from the elongated body of the laser assembly to extend in the direction of said elongated body;
support members (93, 101) secured to the plurality of rods at spaced locations therealong for supporting the laser apparatus, and
mounting members securing the laser assembly to the plurality of rods;
the said thermally conductive cooling fins (206) being supported in a thermal conducting relationship with the elongated body (12) and the electrodes (14, 16) of the laser assembly, and encircling said elongated body and said electrodes;
the air flow established by the air supply means (201) having a greater volume of air flow through regions located about the electrodes of the laser assembly and about a midpoint therebetween than elsewhere.

5. The air cooled laser apparatus of any one of claims 1 to 4 wherein said intake port (207) is centrally located generally with respect to said structure (12, 16, 17) for confining a lasable medium.

6. The air cooled laser apparatus of any one of claims 1 to 5 further including:
a support member (93, 101) for supporting the laser apparatus;
a chassis (126); and
flexible coupling means (127) supporting the chassis at the support member.

7. The air cooled laser apparatus of any one of claims 1 to 6 wherein said structure for confining a lasable medium includes a window (33) for passage of laser radiation from said structure along said laser beam path toward a mirror (26, 27) positioned outside said structure to intercept laser radiation passing through said window, characterized by a mounting assembly for said window and mirror comprising:

an enclosure (28, 29) for joining to said structure for confining said lasable medium, extending therefrom and surrounding the laser beam path, said enclosure having said window (33) located to intercept the laser beam path for passage of laser radiation from the interior to the exterior of said enclosure along said laser beam path, and said enclosure having an open end (32) located to intercept the laser beam path for passage of laser radiation from said gas confining structure to the interior of said enclosure along said laser beam path;
a hermetic seal means (49) joined to the enclosure for hermetically sealing said enclosure to the gas confining structure, with the open end of said enclosure aligned with an opening through said structure whereby the interiors defined by said enclosure and structure are isolated from the surrounding atmosphere;
a rigid housing (51) defining a passage extending along the laser beam path, said housing having a seat supporting the mirror in said passage;
a flexible sealed joint (58) coupling the rigid housing to the enclosure with the window of said enclosure in the passage defined by said rigid housing, said flexible sealed joint inhibiting flow into said passage of contaminants from the exterior while permitting relative movement between said rigid housing and said enclosure generally in the direction of the laser beam path;
a seal (69,71) coupled between said mirror and the rigid housing for inhibiting flow into the passage of contaminants from the exterior; and
a mounting structure (70) for securing the rigid housing to the gas confining structure of said laser apparatus.

## Revendications

1. Appareil à laser à refroidissement par l'air, comprenant:
un résonateur laser comportant une structure (12, 16, 17) pour retenir ou confiner un agent de formation de laser et définissant une région de formation de laser entre des miroirs de laser (26, 27) disposés en regard l'un de l'autre en des emplacements espacés le long d'un parcours de faisceau laser;
un ensemble d'ailettes de refroidissement (206) thermiquement conductrices, supportées par la structure du résonateur laser qui retient l'agent de formation de laser de façon à établir une liaison thermiquement conductrice avec cette structure et à définir des parcours de passage d'air entre des ailettes mutuellement adjacentes, chacune desdites ailettes de refroidissement entourant ladite structure de résonateur laser et s'étendant transversalement au parcours du faisceau laser et des moyens d'alimentation d'air (201) établissant un courant d'air le long de parcours de courant d'air transversaux au parcours du faisceau laser qui passe entre lesdites ailettes de refroidissement;
caractérisé en ce que un conduit d'air (202) est prévu depuis une ouverture d'admission (207) jusqu'à une ouverture d'échappement (208) de façon à entourer les ailettes de refroidissement et à définir lesdits parcours du courant d'air;
et en ce que lesdits moyens d'alimentation d'air (201) sont reliés à l'une au moins des ouvertures du conduit d'air pour établir un courant d'air à partir de l'ouverture d'admission, entre les ailettes de refroidissement et jusqu'à l'ouverture d'échappement, ledit courant d'air étant réparti de façon non uniforme le long de la direction suivie par le parcours du faisceau laser de manière qu'un volume d'air plus important s'écoule par des régions situées approximativement aux extrémités de la région de formation de laser et par un point central situé entre elles, que par ailleurs.

2. Appareil à laser à refroidissement par l'air selon la revendication 1, caractérisé en ce que le conduit d'air définit un parcours de courant d'air en ligne droite s'étendant transversalement au parcours (13) suivi par le faisceau laser depuis l'ouverture d'admission (207) vers l'ouverture d'échappement (208), les moyens d'alimentation d'air comprenant deux ventilateurs (211, 212) à flux axial entraînés moteur, reliés de manière à établir la communication pour le courant d'air à l'une desdites ouvertures côte à côte dans la direction du parcours suivi par le faisceau laser, leurs axes de parcours de l'air étant face à la direction dans laquelle s'étendent les ailettes de refroidissement, et chacun desdits ventilateurs comprenant un ensemble d'aubes (213) présentant des pointes (217) qui décrivent un parcours en alignement avec les régions situées autour du point central et de l'extrémité de la région de formation de laser.

3. Appareil à laser à refroidissement par l'air selon la revendication 1 ou la revendication 2, caractérisé en ce que les aubes de chacun des ventilateurs entraînés par moteur sont espacées des ailettes de refroidissement d'une distance inférieure au diamètre du parcours décrit par les pointes desdites aubes.

4. Appareil à laser à refroidissement par l'air selon l'une quelconque des revendications 1 à 3, caractérisé en ce que ledit résonateur est constitué par un dispositif à laser comportant:
un corps allongé (12) en un matériau électriquement isolant définissant un alésage allongé (14) le long d'un parcours pour faisceau laser en vue de retenir un agent gazeux pouvant former un laser;
des électrodes (16, 17) fixées au corps électriquement isolant aux extrémités opposées de l'alésage allongé pour être reliées à une source de tension en vue d'initier et de maintenir une action de formation de laser dans une région de formation de laser à l'intérieur dudit alésage allongé;
des joints hermétiques (31, 43) reliés au corps électriquement isolant (12) aux extrémités opposées de l'alésage allongé pour former une enceinte pour l'agent gazeux pouvant former un laser qui est hermétiquement fermée par rapport à l'atmosphère ambiante sur ledit corps électriquement isolant;
et des miroirs à laser (26, 27) supportés en regard l'un de l'autre en des emplacements espacés le long du parcours du faisceau laser, les électrodes étant montées entre eux pour définir une cavité résonnante en vue de soutenir l'action de formation de laser;
l'appareil à laser comprenant en outre un support pour supporter le dispositif à laser et comportant:
un ensemble de tiges (92) espacées du corps allongé du dispositif à laser de façon à s'étendre dans la direction dudit corps allongé;
des éléments de support (93, 101) fixés à l'ensemble de tiges en des emplacements espacés le long de ces dernières pour supporter l'appareil à laser, et des éléments de montage fixant le dispositif à laser à l'ensemble de tiges;
lesdites ailettes de refroidissement (206) thermiquement conductrices étant supportées de façon à établir une liaison thermiquement conductrice avec le corps allongé (12) et les électrodes (14, 16) du dispositif à laser, et entourant ledit corps allongé et lesdites électrodes;
le courant de l'air établi par les moyens d'alimentation d'air (201) présentant un volume plus important au travers des régions situées autour des électrodes du dispositif à laser et autour d'un point central situé entre elles que par ailleurs.

5. Appareil à laser à refroidissement par l'air selon l'une quelconque des revendications 1 à 4, caractérisé en ce que ladite ouverture d'admission (207) est située généralement centralement par rapport à ladite structure (12, 16, 17) pour retenir l'agent de formation de laser.

. 6. Appareil à laser à refroidissement par l'air selon l'une quelconque des revendications 1 à 5, caractérisé en ce qu'il comprend en outre:
un organe de support (93, 101) pour supporter l'appareil à laser;
un châssis (126), et des moyens d'accouplement flexibles (127) supportant le châssis sur l'organe de support.

7. Appareil à laser à refroidissement par l'air selon l'une quelconque des revendications 1 à 6, dans lequel ladite structure pour retenir un agent de formation de laser comprend une fenêtre (33) destinée au passage des radiations laser provenant de ladite structure, le long dudit parcours de faisceau laser, en direction d'un miroir (26, 27) disposé à l'extérieur de ladite structure pour intercepter la radiation laser traversant ladite fenêtre, caractérisé par un dispositif de montage de ladite fenêtre et dudit miroir comprenant:
une enceinte (28, 29) destinée à être assemblés sur ladite structure destinée à retenir ledit agent de formation de laser, s'étendant à partir de cette dernière et entourant le parcours du faisceau laser, ladite enceinte comprenant ladite fenêtre (33) disposée de manière à intercepter le parcours suivi par le faisceau laser en vue du passage des radiations laser de l'intérieur vers l'extérieur de ladite enceinte le long dudit parcours du faisceau laser, et ladite enceinte comprenant une extrémité ouverte (32) disposée de façon à intercepter le parcours du faisceau laser en vue du passage des radiations laser à partir de ladite structure de retenue des gaz vers l'intérieur de ladite enceinte le long dudit parcours de faisceau laser;
des moyens de fermeture hermétique (49) associés à l'enceinte pour relier de façon hermétique ladite enceinte à la structure de retenue des gaz, l'extrémité ouverte de ladite enceinte étant en alignement avec une ouverture traversant ladite structure, ce grâce à quoi les cavités internes définies par ladite enceinte et ladite structure sont isolées de l'atmosphère environnante;
un logement rigide (51) définissant un passage s'étendant le long du parcours du faisceau laser, ledit logement comprenant un siège supportant le miroir dans ledit passage;
un joint d'étanchéité flexible (58) reliant le logement rigide à l'enceinte, la fenêtre de ladite enceinte étant dans le passage défini par ledit logement rigide, ledit joint d'étanchéité flexible empêchant l'arrivée dans ledit passage de contaminants venant de l'extérieur tout en autorisant un mouvement relatif entre ledit logement rigide et ladite enceinte, généralement dans la direction du parcours du faisceau laser;
un joint (69, 71) disposé entre ledit miroir et ledit logement rigide pour empêcher l'arrivée dans le passage de contaminants provenant de l'extérieur;
et une structure de montage (70) pour fixer le logement rigide à la structure de retenue de gaz dudit appareil à laser.

## Patentansprüche

1. Luftgekühlter Laserapparat mit:
einem Laserresonator mit einem Aufbau (12, 16, 17) zum Einschließen eines Laser-Mediums und zur Bildung eines Laser-Bereichs zwischen Laser-Spiegeln (26, 27), die gegenüber an voneinander beabstandeten Stellen auf einem Laserstrahlpfad angeordnet sind;
einer Anzahl von wärmeleitenden Kühlrippen (206), die in wärmeleitender Beziehung von dem Aufbau des Laserresonators getragen werden, der das Laser-Medium einschließt, um Luftströmungswege zwischen benachbarten Rippen zu bilden, wobei jede der Kühlrippen den Laserresonatoraufbau umgibt und sich quer zu dem Laserstrahlpfad erstreckt und wobei Luftzuführmittel (201) eine Luftströmung entlang den Luftströmungspfaden quer zum Laserstrahlpfad einrichten, die quer zu den Kühlrippen verlaufen; dadurch gekennzeichnet,
daß ein Luftkanal (202) vorgesehen ist, der sich von einer Einlaßöffnung (207) zu einer Auslaßöffnung (208) erstreckt, um die Kühlrippen einzuschließen und die Luftströmungswege zu bilden; und
daß die Luftversorgungsmittel (201) an mindestens eine der Öffnungen des Luftkanals angeschlossen sind, um eine Luftströmung von der Einlaßöffnung durch die Kühlrippen und zu der Auslaßöffnung einzurichten, wobei die Luftströmung ungleichmäßig entlang der Richtung des Laserstrahlpfads verteilt ist, so daß ein größeres Luftvolumen durch Bereiche strömt, die um Enden des Laserbereichs und um eine dazwischenleigende Stelle liegen, als woanders.

2. Luftgekühlter Laserapparat gemäß Anspruch 1, bei dem der Luftkanal einen geradlinigen Luftströmungsweg bildet, der sich quer zu dem Laserstrahlpfad (13) von der Einlaßöffnung (207) zu der Auslaßöffnung (208) ersteckt, wobei das Luftversorgungsmittel zwei motorgetriebene Axialgebläse (211, 212) aufweist, die in Luftströmungsverbindung an eine der beiden Öffnungen Seite an Seite in Richtung des Laserstrahlpfades angeschlossen sind, wobei ihre Luftströmungsachsen in Richtung der Kühlrippenerstreckung zeigen und wobei jedes der Gebläse eine Anzahl von Schaufeln (213) mit Spitzen (217) aufweist, die einen Weg beschreiben, der mit den Bereichen fluchtet, die um die Mitte und das Ende des Laserbereichs angeordnet sind.

3. Luftgekühlter Laserapparat nach Anspruch 1 oder 2, bei dem die Schaufeln jedes motorgetriebenen Gebläses von den Kühlrippen weniger als der Durchmesser des von den Spitzen der Schaufeln beschriebenen Pfades beabstandet sind.

4. Luftgekühlter Laserapparat nach einem der Ansprüche 1 bis 3, dadurch gekennzeichnet, daß der Resonator von einer Laseranordnung gebildet ist, die aufweist:
einen länglichen Körper (12) von elektrisch isolierendem Material, das eine längliche Bohrung (14) entlang eines Laserstrahlpfades zum Einschließen eines LaserGasmediums bildet;
Elektroden (16, 17), die an den elektrisch isolierenden Körper an gegenüberliegenden Enden der länglichen Bohrung befestigt sind, um eine Spannungsquelle anzuschließen, die eine Laser-wirkung in einem Laserbereich in der länglichen Bohrung auslöst und aufrechterhält;
hermetische Dichtungen (31, 43), die an den elektrisch isolierenden Körper (12) an gegenüberliegenden Enden der länglichen Bohrung angeschlossen sind, um eine Einfassung für das Laser-Gasmedium zu bilden, das von der umgebenden Atmosphäre gegenüber dem elektrisch isolierenden Körper hermetisch abgeschlossen ist; und
Laserspiegel (26, 27), die gegenüber von einander an auf dem Laserstrahlpfad beabstandeten Stellen angeordnet sind, wobei die Elektroden dazwischen liegen, um einen Resonanzhohlraum für die Aufrechterhaltung der Laser-wirkung zu bilden;
wobei der Laserapparat ferner eine Halteanordnung zum Halten der Laseranordnung aufweist und versehen ist mit:
einer Anzahl von Stangen (92), die von dem länglichen Körper der Laseranordnung beabstandet sind, um sich in Richtung des länglichen Körpers zu erstrecken;
Halteelementen (23,101), die an der Anzahl der Stangen an darauf beabstandeten Stellen befestigt sind, um den Laserapparat zu halten, und
Halteteilen, die die Laseranordnung an der Anzahl von Stangen befestigen;
wobei die wärmeleitfähigen Kühlrippen (206) in wärmeleitender Beziehung zu dem länglichen Körper (12) und den Elektroden (14, 16) der Laseranordnung gehalten sind und den länglichen Körper und die Elektroden umgeben; und
wobei die von dem Luftversorgungsmittel (201) eingerichtete Luftströmung ein größeres Luftvolumen durch Bereiche leitet, welche die Elektroden der Laseranordnung und eine dazwischen liegende Mittelstelle umgeben, als anderswo.

5. Luftgekühlter Laserapparat nach einem der Ansprüche 1 bis 4, dadurch gekennzeichnet, daß die Einlaßöffnung (207) im allgemeinen in bezug auf den Aufbau (12, 16, 17) zum Einschließen eines Laser-Mediums mittig angeordnet ist.

6. Luftgekühlter Laserapparat nach einem der Ansprüche 1 bis 5, ferner gekennzeichnet durch:
ein Tragelement (93, 101) zum Tragen des Laserrapparats;
ein Chassis (126); und
ein flexibles Kupplungsmittel (127), welches das Chassis an dem Tragelement hält.

7. Luftgekühlter Laserapparat nach einem der Ansprüche 1 bis 6, dadurch gekennzeichnet, daß der Aufbau zum Einschließen eines Laser-Mediums ein Fenster (33) für den Durchgang der Laserstrahlung von dem Aufbau entlang dem Laserstrahlpfad in Richtung auf einen Spiegel (26, 27) aufweist, der außerhalb des Aufbaus angeordnet ist, um Laserstrahlung zu erfassen, die durch das Fenster tritt, gekennzeichnet durch eine Halteanordnung für das Fenster und den Spiegel mit:
einer Einfassung (28, 29) zum Anschließen an den Aufbau für das Einschließen des Laser-Mediums, welche sich davon erstreckt und den Laserstrahlpfad umgibt, wobei die Einfassung das Fenster (33) so angeordnet hat, das es den Laserstrahlpfed für den Durchgang von Laserstrahlen von dem Inneren zum Äußeren der Einfassung entlang dem Laserstrahlpfad erfaßt, und wobei die Einfassung ein offenes Ende (32) aufweist, das so angeordnet ist, um den Laserstrahlpfad für den Durchgang von Laserstrahltung von dem gaseinschließenden Aufbau zu dem Inneren der Einfassung entlang dem Laserstrahlpfad zu erfassen;
ein hermetisches Dichtungsmittel (49), welches an die Einfassung angeschlossen ist, um die Einfassung hermetisch gegenüber dem gaseinschließenden Aufbau abzudichten, wobei das offene Ende der Einfassung mit einer Öffnung durch den Aufbau fluchtet, wodurch die von der Einfassung und dem Aufbau definierten Innenräume von der umgebenden Atmosphäre isoliert sind;
ein starres Gehäuse (51), das einen Durchgang definiert, der sich entlang dem Laserstrahlpfad erstreckt, wobei das Gehäuse einen Sitz aufweist, der den Spiegel in dem Durchgang hält;
eine flexibel abgedichtete Stoßstelle (58), die das starre Gehäuse mit der Einfassung koppelt, wobei das Fenster der Einfassung in dem von dem starren Gehäuse gebildeten Durchgang liegt und die flexibel abgedichtete Stoßstelle eine Strömung von Verunreinigungen von dem Äußeren in den Durchgang verhindert, während eine Relativbewegung zwischen dem starren Gehäuse und der Einfassung allgemein in Richtung des Laserstrahlpfades zugelassen ist;
eine Dichtung (69, 71), die zwischen dem Spiegeln und das starre Gehäuse eingesetzt ist, um die Strömung von Verunreinigungen aus dem Außeraum in den Durchgang zu verhindern; und
einen Halteaufbau (70) zum Befestigen des starren Gehäuses an dem gaseinschließenden Aufbau des Laserapparats.
